(19) 

**Europäisches Patentamt**
**European Patent Office**
**Office européen des brevets**

(11) **EP 4 692 412 A1**

(12) **EUROPEAN PATENT APPLICATION**
published in accordance with Art. 153(4) EPC

(43) Date of publication:
**11.02.2026 Bulletin 2026/07**

(21) Application number: **24778659.3**

(22) Date of filing: **01.02.2024**

(51) International Patent Classification (IPC):
**C23C 4/11** (2016.01)        **C01F 17/34** (2020.01)
**C04B 41/87** (2006.01)

(52) Cooperative Patent Classification (CPC):
**C01F 17/34; C04B 41/87; C23C 4/11**

(86) International application number:
**PCT/JP2024/003194**

(87) International publication number:
**WO 2024/202513 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058418**

(71) Applicant: **Fujimi Incorporated**
**Kiyosu-shi, Aichi 452-8502 (JP)**

(72) Inventor: **SEKI, Kohei**
**Kiyosu-shi, Aichi 452-8502 (JP)**

(74) Representative: **Maiwald GmbH**
**Engineering**
**Elisenhof**
**Elisenstrasse 3**
**80335 München (DE)**

(54) **POWDER FOR THERMAL SPRAYING**

(57)    Provided is a technology that improves fineness and reduces surface roughness as well as reduces the proportion of a separated phase in a thermal spraying film. The thermal spraying powder disclosed herein is a thermal spraying powder containing a multiple oxide including a plurality of metal oxides. In the thermal spraying powder, the particle diameter $D_{10}$, which is a particle diameter at a point where a cumulative particle volume accumulated from the side of small particle diameters, is 10% of the total particle volume in a cumulative particle diameter distribution on volume basis based on a particle size distribution measuring method by laser diffractive scattering is 10 $\mu$m or more, and the particle diameter $D_{50}$, which is a particle diameter at a point where a cumulative particle volume accumulated from the side of small particle diameters is 50% of the total particle volume in a cumulative particle diameter distribution on volume basis based on a particle size distribution measuring method by laser diffractive scattering is 40 $\mu$m or less. Under a condition at 1 atmosphere, there is a difference of 500°C or higher between the maximum value and the minimum value of boiling points among a plurality of metal oxides. Use of a thermal spraying powder with such a composition allows a thermal spraying film to have improved fineness and reduced surface roughness, as well as less proportion of a separated phase.

**EP 4 692 412 A1**

**Description**

[Technical Field]

The disclosure relates to a powdered material for additive manufacturing. The disclosure relates to a method of producing the powdered material. This application claims priority based on Japanese Patent Application No. 2023-058418 filed on March 31, 2023, the content of which is incorporated herein by reference in its entirety.
The disclosure relates to a thermal spraying powder.

[Background Art]

The thermal spraying powder disclosed in Patent Document 1 contains granulated-sintered powder of a multiple oxide containing yttrium and aluminum. The granulated-sintered powder is formed of secondary particles derived by granulating and sintering primary particles. The secondary particles has a compressive strength of 15 MPa or more. The thermal spraying powder has a 10% cumulative particle diameter of 6 $\mu$m or more. Measurement for X-ray diffraction of the thermal spraying powder has shown that the ratio of the strength of the X-ray diffraction peak derived from the (222) plane of yttria relative to the strength of the maximum peak among the X-ray diffraction peak derived from the (420) plane of the garnet phase in the multiple oxide, the X-ray diffraction peak derived from the (420) plane of the perovskite phase in the multiple oxide, and the X-ray diffraction peak of the (-122) plane of the monoclinic phase in the multiple oxide is 20% or less. The publication describes that use of the thermal spraying powder enables good formation of a thermal spraying film of a multiple oxide containing yttrium and aluminum.

[Citation List]

[Patent Literature]

[Patent Document 1] Japanese Patent No. 4560387

[Summary of Invention]

[Technical Problem]

In use of a thermal spraying powder containing a multiple oxide, it is required to provide a thermal spraying film having high fineness and low surface roughness as well as to reduce the proportion of a separated phase in the thermal spraying film. In view of these circumstances, the present invention has an object to provide a technology that improves fineness and reduces surface roughness as well as reduces the proportion of a separated phase in a thermal spraying film.

[Solution to Problem]

The thermal spraying powder disclosed herein is a thermal spraying powder containing a multiple oxide including a plurality of metal oxides. In the thermal spraying powder, the particle diameter at a point where a cumulative particle volume accumulated from the side of small particle diameters is 10% of the total particle volume in a cumulative particle diameter distribution on volume basis based on a particle size distribution measuring method by laser diffractive scattering (hereinafter sometimes referred to as "particle diameter $D_{10}$") is 10 $\mu$m or more, and the particle diameter at a point where a cumulative particle volume accumulated from the side of small particle diameters is 50% of the total particle volume in a cumulative particle diameter distribution on volume basis based on a particle size distribution measuring method by laser diffractive scattering (hereinafter sometimes referred to as "particle diameter $D_{50}$") is 40 $\mu$m or less. Under a condition at 1 atmosphere, there is a difference of 500°C or higher between the maximum value and the minimum value of boiling points among a plurality of metal oxides. Use of a thermal spraying powder with such a composition allows a thermal spraying film to have improved fineness and reduced surface roughness, as well as less proportion of a separated phase.
In a preferred embodiment of the thermal spraying powder disclosed herein, a multiple oxide contains at least two or more from the group of lanthanoid elements consisting of La, Ce, Pr, Nd, Sm, Eu, Gd, Tb, Dy, Ho, Er, Tm, Yb, and Lu; metalloid elements consisting of Si and Ge; typical elements consisting of Al and Ga; and transition elements consisting of Sc, Y, Ti, Zr, Hf, Nb, Ta, Mo, and W. With such a composition, use of a thermal spraying powder containing at least two of the aforementioned elements can suitably achieve an effect of the art disclosed herein.
In a preferred embodiment, the thermal spraying powder disclosed herein contains at least two or more from the group consisting of Al, Si, Y, Zr, and Yb. With such a composition, use of a thermal spraying powder containing at least two of the aforementioned elements can suitably achieve an effect of the art disclosed herein.

In a preferred embodiment of the thermal spraying powder disclosed herein, a plurality of metal oxides contains at least two of $Al_2O_3$, $SiO_2$, $Y_2O_3$, $ZrO_2$, and $Yb_2O_3$. With such a composition, use of a thermal spraying powder of a multiple oxide containing at least two of the aforementioned metal oxides can suitably achieve an effect of the art disclosed herein.

In another preferred embodiment, the thermal spraying powder disclosed herein contains a multiple oxide of $Y_2O_3$ and $Al_2O_3$, a multiple oxide of $Yb_2O_3$ and $SiO_2$, or a multiple oxide of $SiO_2$ and $Al_2O_3$. Use of a thermal spraying powder of a multiple oxide containing such a multiple oxide can suitably achieve an effect of the art disclosed herein.

Preferably, the thermal spraying powder disclosed herein contains $YAlO_3$, $Y_4Al_2O_9$, $Y_3Al_5O_{12}$, $Yb_2Si_2O_7$, or $3Al_2O_3 \cdot 2SiO_2$. Use of a thermal spraying powder of a multiple oxide containing such a multiple oxide can suitably achieve an effect of the art disclosed herein.

In another preferred embodiment, the particle diameter $D_{50}$ of the thermal spraying powder disclosed herein is 23 μm or more and 38 m or less. Such a composition can better improve an effect to reduce the proportion of a separated phase in a thermal spraying film. Moreover, the composition can prevent enhancement in surface roughness of a thermal spraying film.

In another preferred embodiment, the particle diameter $D_{10}$ of the thermal spraying powder disclosed herein is 12 μm or more and 21 μm or less. Such a composition can suppress increase in surface roughness of a thermal spraying film. Moreover, the composition can prevent enhancement in surface roughness of a thermal spraying film.

In another preferred embodiment, the thermal spraying powder disclosed herein is formed of secondary particles derived by binding primary particles of a multiple oxide together. Such a composition tends to further prevent phase splitting in a thermal spraying film.

Preferably, the secondary particles are granulated-sintered particles. Such a composition tends to further prevent phase splitting in a thermal spraying film.

In another preferred embodiment, the thermal spraying powder disclosed herein is formed of melted-pulverized powder of a multiple oxide. Such a composition suitably achieves an effect of the art disclosed herein. The composition can also provide simpler production of the thermal spraying powder.

[Brief Description of Drawings]

Fig. 1 is a cross-sectional SEM image of a thermal spraying film in Example 1.
Fig. 2 is a cross-sectional SEM image of a thermal spraying film in Example 2.
Fig. 3 is a cross-sectional SEM image of a thermal spraying film in Example 3.
Fig. 4 is a cross-sectional SEM image of a thermal spraying film in Example 4.
Fig. 5 is a cross-sectional SEM image of a thermal spraying film in Example 5.
Fig. 6 is a cross-sectional SEM image of a thermal spraying film in Example 6.
Fig. 7 is a cross-sectional SEM image of a thermal spraying film in Example 7.
Fig. 8 is a cross-sectional SEM image of a thermal spraying film in Example 8.
Fig. 9 is a cross-sectional SEM image of a thermal spraying film in Example 9.
Fig. 10 is a cross-sectional SEM image of a thermal spraying film in Example 10.
Fig. 11 is a cross-sectional SEM image of a thermal spraying film in Example 11.
Fig. 12 is a cross-sectional SEM image of a thermal spraying film in Example 12.
Fig. 13 is a cross-sectional SEM image of a thermal spraying film in Example 13.
Fig. 14 is a cross-sectional SEM image of a thermal spraying film in Example 14.

[Description of Embodiments]

Preferred embodiments of the art disclosed herein will now be described below. Matters that are other than those particularly mentioned herein but are necessary for implementation of the present invention can be recognized as matters to be designed by those skilled in the art based on conventional technologies in the art. The art disclosed herein can be implemented based on contents disclosed herein and common technical knowledge in the art. The term "X to Y" that represents a numerical range herein means "X or more and Y or less" and also a range "more than X and less than Y", a range "more than X and Y or less", and a range "X or more and less than Y", unless otherwise stated.

<Definition>

As used herein, the term "thermal spraying powder" refers to a powder material used for thermal spraying. As used herein, "composite particle" is a particle constituted with a plurality of materials differing from one another, and refers to particulate matter (having a particle shape) in which the plurality of materials are mutually bound and integrated and behave as a single particle. Examples of a composite particle include a granulated particle and a granulated-sintered particle constituted with at least two or more kinds of materials. As used herein, the term "primary particle" means a minimum unit identifiable as particulate matter from its appearance among structural components that constitutes the thermal spraying powder. Accordingly, when a composite particle constituting the thermal spraying powder disclosed herein contains a secondary particle, particles constituting the secondary particle is referred to as, e.g., primary particles. Herein, the term "secondary particle" refers to particulate matter in which primary particles are three-dimensionally bound and integrated and behave as a single particle. Examples of "secondary particle" herein include a granulated particle, and a particle sintered after granulation (a granulated-sintered particle).

The term "bind" as used herein refers to direct or indirect binding of two or more primary particles. Examples of "binding" include binding between primary particles by chemical reaction, binding with attraction between primary particles through simple absorption, binding with using an anchoring effect that allows an adhesive material or the like to enter bumps and dips on a surface of a primary particle, binding between primary particles with using an effect of mutual electrostatic attraction, and binding with fusing and integrating surfaces of primary particles. In regard to secondary particles constituted with two or more materials, the term 'binding" encompasses binding in which one material constitutes primary particles while the other material fuses and integrates primary particles. As used herein, the reference to "material particles" designates particles that constitute powder at a raw material stage used for producing the thermal spraying powder disclosed herein.

<Method of Measuring Particle Diameter>

Herein, the term "particle diameter $D_{10}$" refers to a particle diameter at a point where a cumulative particle volume accumulated from the side of small particle diameters is 10% of the total particle volume in a cumulative particle diameter distribution on volume basis based on a particle size distribution measuring method by laser diffractive scattering. The term "particle diameter $D_{50}$" refers to a particle diameter at a point where a cumulative particle volume accumulated from the side of small particle diameters is 50% of the total particle volume in a cumulative particle diameter distribution on volume basis based on a particle size distribution measuring method by laser diffractive scattering. Measurement of a particle diameter employs, e.g., a commercially available measuring device.

Thermal spraying of a thermal spraying powder that contains a multiple oxide including a plurality of metal oxides may, e.g., generate a difference in compositions among splats (melted-flattened particles) and form a thermal spraying film with an inhomogeneous composition. For example, in terms of a plurality of metal oxides included in a multiple oxide, a metal oxide having a relatively low boiling point can vaporize during thermal spraying, thereby forming an altered phase locally in addition to a main phase formed of a multiple oxide in a thermal spraying film. The altered phase may be a phase formed of a metal oxide having a relatively high boiling point, or a phase containing a greater amount of a metal oxide having a relatively high boiling point. The inventors aimed to reduce the proportion of a separated phase in a thermal spraying film (i.e., the proportion of an altered phase) in production of the thermal spraying film by thermally spraying such a multiple oxide. The inventors thus investigated a composition of a thermal spraying powder.

<Composition of Thermal Spraying Powder>

The thermal spraying powder disclosed herein contains, e.g., a multiple oxide. The thermal spraying powder is preferably formed of a multiple oxide powder, but may contain inevitable impurities originated from a production process of the multiple oxide powder or the like. The content proportion of the inevitable impurities to the total of the thermal spraying powder is generally 5% by mass or less, preferably 3% by mass or less, more preferably 1% by mass or less, even more preferably 0.5% by mass or less, particularly preferably 0.1% by mass or less; the closer to 0% by mass, the better.

A multiple oxide contains, e.g., a plurality of metal oxides. Here, under a condition at 1 atmosphere, there is a difference of 500°C or higher between the maximum value and the minimum value of boiling points among the plurality of metal oxides. As the plurality of metal oxides included in a multiple oxide has a larger difference between the maximum value and the minimum value of their boiling points, a thermal spraying film thus formed is more likely to generate a separated phase therein. Therefore, in view of better achieving an effect of the art disclosed herein, the difference between the maximum value and minimum value of boiling points described above is suitably, e.g., 700°C or higher, preferably 1000°C or higher, more preferably 1100°C or higher, even more preferably 1200°C or higher or 1300°C or higher. Meanwhile, in the same view, the difference between the maximum value and minimum value of boiling points described above is generally, suitably 3000°C or lower, e.g., 2500°C or lower, or may be 2300°C or lower.

The plurality of metal oxides should contain at least two metal oxides that are selected from a variety of metal oxides and have a difference of 500°C or higher between the maximum value and the minimum of boiling points under a condition at 1 atmosphere. Examples of the metal oxides include oxides of metalloid elements such as silicon (Si), germanium (Ge), antimony (Sb), and bismuth (Bi); typical elements such as magnesium (Mg), calcium (Ca), strontium (Sr), barium (Ba), zinc (Zn), aluminum (Al), gallium (Ga), indium (In), tin (Sn), and lead (Pb); transition elements such as scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), iron (Fe), cobalt (Co), nickel (Ni), copper (Cu), silver (Ag), and gold (Au); and lanthanoid elements such as lanthanum (La), cerium (Ce), praseodymium (Pr), neodymium (Nd), samarium (Sm), terbium (Tb), europium (Er), gadolinium (Gd), dysprosium (Dy), holmium (Ho), erbium (Er), thulium (Tm), ytterbium (Yb), and lutetium (Lu).

Examples of the metal oxide include alumina, zirconia, yttria, chromia, titania, cobalt oxide, magnesia, silica, calcia , ceria, iron oxide, nickel oxide, silver oxide, copper oxide, zinc oxide, gallium oxide, germanium oxide, strontium oxide, scandium oxide, samarium oxide, bismuth oxide, lanthanum oxide, lutetium oxide, hafnium oxide, vanadium oxide, niobium oxide, tungsten oxide, manganese oxide, tantalum oxide, terbium oxide, europium oxide, gadolinium oxide, dysprosium oxide, holmium oxide, erbium oxide, thulium oxide, praseodymium oxide, ytterbium oxide, neodymium oxide, tin oxide, antimony oxide, and molybdenum oxide.

A boiling point of the metal oxide can refer to, e.g., Reference 1 to Reference 3 as follows:

- Reference 1:
  Samsonov, G. V., The Latest Oxide Handbook-Physicochemical Properties, 2nd, devised and enlarged edition, Japan-Soviet Press Agency, 1979, 209.
- Reference 2:
  Ginya Adachi, Science of Rare Earths, Kagaku-Dojin Publishing Company, Inc., 1999, 198 (reference source: HAIRE, R. G., et Al. Handbook on the Physics and Chemistry of Rare Earth, vol. 18: Lanthanide/AcTinide Chemistry. 1994).
- Reference 3:
  The Chemical Society of Japan, Handbook of Chemistry: Pure Chemistry, 6th ed., 2021.

For example, the boiling points of $Ga_2O_3$, $GeO_2$, and $Ta_2O_5$ can refer to the boiling points described in Reference 1 (Samsonov, G. V., The Latest Oxide Handbook-Physicochemical Properties, 2nd, devised and enlarged edition, Japan-Soviet Press Agency, 1979, 209). The boiling points of $Yb_2O_3$, $CeO_2$, $Nd_2O_3$, $Sm_2O_3$, $Eu_2O_3$, $Gd_2O_3$, $Dy_2O_3$, $Ho_2O_3$, $Er_2O_3$, $Tm_2O_3$, $Lu_2O_3$, and $Pr_2O_3$ can refer to the boiling points described in Reference 2 (Ginya Adachi, Science of Rare Earths, Kagaku-Dojin Publishing Company, Inc., 1999, 198 (reference source: HAIRE, R. G., et Al. Handbook on the Physics and Chemistry of Rare Earth, vol. 18: Lanthanide/AcTinide Chemistry. 1994)). The boiling points of $Y_2O_3$, $Al_2O_3$, $SiO_2$, $ZrO_2$, $WO_3$, and $La_2O_3$ can refer to the boiling points described in Reference 3 (The Chemical Society of Japan, Handbook of Chemistry: Pure Chemistry, 6th ed., 2021). The boiling point of $SiO_2$ can refer to the boiling point of tridymite (2230°C).

In view of preferably achieving an effect of the art disclosed herein, a multiple oxide preferably contains at least two or more of lanthanoid elements such as La, Ce, Pr, Nd, Sm, Eu, Gd, Tb, Dy, Ho, Er, Tm, Yb, and Lu; metalloid element such as Si and Ge; typical elements such as Al and Ga; and transition elements such as Sc, Y, Ti, Zr, Hf, Nb, Ta, Mo, and W.

In view of preferably achieving an effect of the art disclosed herein, the thermal spraying powder should contain at least two or more from the group consisting of Al, Si, Y, Zr, and Yb. The thermal spraying powder should contain a multiple oxide containing at least two elements among these five kinds of elements. A metal oxide included in such a multiple oxide should contain at least one or two of e.g., alumina ($Al_2O_3$), silica ($SiO_2$), yttria ($Y_2O_3$), zirconia ($ZrO_2$), and ytterbium oxide ($Yb_2O_3$). The multiple oxide is preferably, e.g., a multiple oxide of yttria ($Y_2O_3$) and alumina ($Al_2O_3$), a multiple oxide of ytterbium oxide ($Yb_2O_3$) and silica ($SiO_2$), or a multiple oxide of silica ($SiO_2$) and alumina ($Al_2O_3$).

In this case, the multiple oxide may contain, e.g., $YAlO_3$ (yttrium aluminum perovskite; YAP), $Y_4Al_2O_9$ (yttrium aluminum monoclinic; YAM), $Y_3Al_5O_{12}$ (yttrium aluminum garnet; YAG), $Yb_2Si_2O_7$ (ytterbium disilicate; YbDS), or $3Al_2O_3 \cdot 2SiO_2$ (mullite). Inclusion of such a compound in the multiple oxide can provide more reduction in the proportion of a separated phase in a thermal spraying film. Alternatively, the multiple oxide may contain, e.g., a multiple oxide of zirconia ($ZrO_2$) and alumina ($Al_2O_3$), a multiple oxide of zirconia ($ZrO_2$) and silica ($SiO_2$), a multiple oxide of ytterbium oxide ($Yb_2O_3$) and alumina ($Al_2O_3$), or a multiple oxide of yttria ($Y_2O_3$) and silica ($SiO_2$). Alternatively, the multiple oxide may contain a multiple oxide containing three or more components such as a multiple oxide of yttria ($Y_2O_3$) and alumina ($Al_2O_3$) and silica ($SiO_2$).

The multiple oxide is not limited to those described above. The multiple oxide may contain, e.g., a multiple oxide of hafnium oxide ($HfO_2$) and alumina ($Al_2O_3$), a multiple oxide of hafnium oxide ($HfO_2$) and silica ($SiO_2$), a multiple oxide of titania ($TiO_2$) and silica ($SiO_2$), a multiple oxide of lanthanum oxide ($La_2O_3$) and silica ($SiO_2$), or a multiple oxide of lanthanum oxide ($La_2O_3$) and alumina ($Al_2O_3$).

Furthermore, the inventors investigated to find that an increased proportion of small particles in a thermal spraying powder containing a multiple oxide leads to vaporization of a metal oxide having a relatively low boiling point during thermal spraying, thereby facilitating generation of a separated phase in a thermal spraying film. The inventors also found that an increased proportion of large particles in a thermal spraying powder tends to provide a thermal spraying film with higher porosity, increased surface roughness, and the like. The inventors further investigated earnestly and consequently found that use of a thermal spraying powder having a predetermined particle size distribution can provide improved fineness and reduced surface roughness, as well as less proportion of a separated phase in a thermal spraying film of a thermal spraying powder containing a multiple oxide.

The thermal spraying powder disclosed herein should have a particle diameter $D_{10}$ of, e.g., 10 $\mu$m or more. As the particle diameter $D_{10}$ is larger, for example, the proportion of small particles is reduced in a particle size distribution of the total of a thermal spraying powder. Moreover, as the particle diameter $D_{10}$ is larger, the proportion of a separated phase tends to be reduced in a thermal spraying film. In such a view, the particle diameter $D_{10}$ is preferably 11 $\mu$m or more, more preferably 12 $\mu$m or more, more preferably 15 $\mu$m or more, even more preferably 20 $\mu$m or more. Meanwhile, in view of preventing increase in surface roughness of a thermal spraying film, the particle diameter $D_{10}$ is, e.g., 40 $\mu$m or less, preferably 35 $\mu$m or less, more preferably 33 $\mu$m or less, more preferably 30 $\mu$m or less, more preferably 27.5 $\mu$m or less, even more preferably 21 $\mu$m or less. In a preferred embodiment, the particle diameter $D_{10}$ is 12 $\mu$m to 21 $\mu$m.

The thermal spraying powder disclosed herein should also have a particle diameter $D_{50}$ of 40 $\mu$m or less. As the particle diameter $D_{50}$ is smaller, a thermal spraying film tends to have higher fineness and less surface roughness. In such a view, the particle diameter $D_{50}$ is suitably 38 $\mu$m or less, preferably 33 $\mu$m or less, more preferably 30 $\mu$m or less, even more preferably 25 $\mu$m or less. Meanwhile, in view of preventing increase in the population of a separated phase in a thermal spraying film, the particle diameter $D_{50}$ is preferably 15 $\mu$m or more, more preferably 20 $\mu$m or more, even more preferably 23 $\mu$m or more. In a preferred embodiment, the particle diameter $D_{50}$ is 23 $\mu$m to 38 $\mu$m.

The thermal spraying powder disclosed herein may be formed of composite particles produced by mixing, e.g., a plurality kinds of metal oxide particles (powdered metal oxides) included in a multiple oxide. The composite particles are particles containing materials different from one another, i.e., a plurality kinds of metal oxide particles, each of which integrates with one another and behaves together as a single particle. The thermal spraying powder should be formed of, e.g., secondary particles (composite particles) in which primary particles of a multiple oxide are bound to one another. Forming the thermal spraying powder from secondary particles (composite particle) of a multiple oxide can lead to a reduced risk of evaporating a metal oxide having a relatively low boiling point during thermal spraying. This can reduce the proportion of a separated phase in a thermal spraying film.

The shape of a secondary particle (composite particle) is, e.g., an integrated form of primary particles of a multiple oxide, and is not limited as long as an effect of the art disclosed herein can be achieved. The thermal spraying powder disclosed herein preferably contains, e.g., granulated-sintered particles. In other words, the secondary particles are preferably granulated-sintered particles. In this case, granulated particles should be produced first; the granulated particles may be produced by, e.g., blending and mixing a plurality kinds of metal oxide particles (primary particles) included in a multiple oxide with another optional component (e.g., a binder or a solvent) followed by granulation. Alternatively, the granulated particles may also be produced by blending and mixing primary particles of a multiple oxide with another optional component (e.g., a binder or a solvent) followed by granulation.

In granulated-sintered particles, primary particles of a multiple oxide are integrated together by sintering. This binding is achieved by, e.g., sintering at least a part of primary particles of a multiple oxide. Thus, in granulated-sintered particles, primary particles bind to one another more robustly by sintering, thereby making it less likely to break a secondary particle in a process of thermal spraying. This prevents vaporization of a metal oxide having a relatively low boiling point, and thus can reduce the proportion of a separated phase in a thermal spraying film. Moreover, oxides in each multiple oxide have a difference equal to or higher than a predetermined value in boiling points, thereby allowing prevention of vaporization of a metal oxide having a relatively low boiling point, and thus reduction in the proportion of a separated phase in a thermal spraying film.

<Production Method of Thermal Spraying Powder>

The thermal spraying powder disclosed herein may be prepared by, e.g., mixing, as raw material particles (powdered materials), a plurality kinds of metal oxide particles (powdered metal oxides) included in a multiple oxide, which is a material of the thermal spraying powder, with another optional component, assembling and further sintering them together. The thermal spraying powder should be a thermal spraying powder formed of granulated-sintered particles present as secondary particles that are formed by, e.g., mixing each of the raw material particles (primary particles), granulating and further sintering them together, and include each of the primary particles three-dimensionally bound to one another with a gap.

When the thermal spraying powder disclosed herein is formed of granulated-sintered particles, a method of producing the thermal spraying powder may include, e.g., a granulating step, a firing step, a disintegrating step, and a classifying step.

The granulating step is a step of, e.g., granulating raw material particles. In this step, e.g., in order to provide a desired composition ratio for a multiple oxide in the thermal spraying powder, a plurality kinds of metal oxide particles are prepared, and as appropriate, their surfaces are stabilized with a protective agent or the like. Then, the raw material particles thus stabilized are dispersed together with a binder, a variety of additives (e.g., a dispersant), and the like as optional components added as appropriate, into a suitable solvent, to prepare a dispersion. For dispersion of the raw material particles in a solvent, exemplarily used are a homogenizer, a mixer such as a blade mixer, a disperser, or the like. Subsequently, the dispersion thus obtained is used to produce granulated particles by use of, e.g., a granulation method such as wet granulation.

Examples of the granulation method include tumbling granulation, fluid-bed granulation, stirring granulation, crushing granulation, melt granulation, spraying granulation, and microemulsion granulation. A particularly preferred granulation method is spraying granulation. Spraying granulation forms droplets from a dispersion (spray liquid) obtained as described above. The droplets are carried on air current and pass through a spray drier, thereby producing granulated particles.

The content of raw material particles in the spray liquid is preferably, e.g., 10% by mass to 80% by mass. Examples of the binder to be added include a binding agent (e.g., polyvinyl butyral resin (PVB), polyvinyl alcohol resin (PVA), polyvinyl acetate resin, and polyacrylic resin. As the solvent, water can be exemplarily used. The additive amount of the binder is preferably adjusted so as to provide a proportion of 0.05% by mass to 10% by mass (e.g., 1% by mass to 5% by mass) relative to the mass of raw material particles.

The firing step is a step of, e.g., sintering granulated particles. In the firing step, granulated particles are fired at a predetermined temperature (generally, 1000°C to 2000°C) for 1 hour to 10 hours under an air atmosphere; under an inert atmosphere such as a nitrogen atmosphere or a rare gas atmosphere; or in vacuum. The predetermined temperature should be, e.g., a set temperature of a firing furnace. The temperature and time in firing of granulated particles may be appropriately set so as to provide the thermal spraying powder with a desired composition or the like.

The disintegrating step is a step of, e.g., disintegrating a fired material provided at the firing step. The fired material should be disintegrated with, e.g., a pulverizer. As the pulverizer, preferably used are, e.g., a jaw crusher, a cone crusher, a hammer crusher, a rolling crusher, and a stone mill grinder. The disintegrating step can produce granulated-sintered particles in the form of secondary particles in which primary particles are bound (sintered) to one another with a gap. The degree of disintegration of a fired material in this step may be appropriately set so as to, e.g., provide a desired particle size distribution of secondary particles.

The classifying step is a step of, e.g., performing classification of secondary particles provided at the disintegrating step. This may adjust a particle size distribution of the secondary particles to a desired one. For the classification, in addition to classification with a sieve, exemplarily used are classifiers such as an airflow classifier employing Coanda effect, a swirling airflow classifier, a forced vortex centrifugal classifier, or a semi-free vortex centrifugal classifier.

A method of producing the thermal spraying powder has been described for the case that the thermal spraying powder is formed of granulated-sintered particles, as mentioned above. However, the thermal spraying powder does not necessarily have to be formed of granulated-sintered particles. The thermal spraying powder may be formed of a melted-pulverized powder of a multiple oxide in another embodiment. In production of the melted-pulverized powder, for example, a multiple oxide powder is prepared first as a raw material. Next, the multiple oxide powder is heated and melted with an electrical furnace to provide a melted liquid of the multiple oxide. Then, the melted liquid of the multiple oxide is cooled quickly and solidified to provide a solidified material. Subsequently, the solidified material can be disintegrated and classified, thereby producing a melted-pulverized powder of the multiple oxide as the thermal spraying powder. Forming the thermal spraying powder from a melted-pulverized powder of a multiple oxide can lead to simpler production of the thermal spraying powder.

<Application of Thermal Spraying Powder>

Thermal spraying of the thermal spraying powder disclosed herein by various thermal spraying methods enables production of a thermal spraying film on various base materials. The thermal spraying powder may be particularly preferably used for producing a thermal spraying film by plasma thermal spraying such as atmospheric plasma spraying (APS), low-pressure plasma spraying (LPS), or pressurized plasma spraying. The thermal spraying powder may also be otherwise preferably used for high-velocity flame thermal spraying such as high-velocity oxygen-fuel flame (HVOF) spraying, warm spray spraying, or high velocity air-fuel flame (HVAF) spraying. The thermal spraying powder may be supplied in a powder form to a thermal spraying device, or supplied in a slurry form with dispersing in a suitable dispersion medium to a thermal spraying device.

The kind of a base material used for production of a thermal spraying film is not particularly limited. Examples of the base material include aluminum, aluminum alloy, iron, iron steel, copper, copper alloy, nickel, nickel alloy, gold, silver, bismuth, manganese, zinc, and zinc alloy. In particular, among metallic materials used widely, preferred examples are base materials formed of iron steels used as steels for corrosion-resistant structures and exemplified by various SUS materials (possibly, i.e., stainless steel) and the like; aluminum alloys useful as lightweight constructional materials and the like and exemplified by 1000 series to 7000 series aluminum alloys and the like; corrosion-resistant alloys containing an Ni group, a Co group, or a Fe group and exemplified by HASTELLOY®, INCONEL®, STELLITE®, invar, and the like.

As described above, the thermal spraying powder disclosed herein contains a multiple oxide containing a plurality of metal oxides. In the thermal spraying powder, the particle diameter $D_{10}$, which is a particle diameter at a point where a cumulative particle volume accumulated from the side of small particle diameters, is 10% of the total particle volume in a cumulative particle diameter distribution on volume basis based on a particle size distribution measuring method by laser diffractive scattering is 10 $\mu$m or more, and the particle diameter $D_{50}$, which is a particle diameter at a point where a cumulative particle volume accumulated from the side of small particle diameters is 50% of the total particle volume in a cumulative particle diameter distribution on volume basis based on a particle size distribution measuring method by laser diffractive scattering, is 40 $\mu$m or less. Under a condition at 1 atmosphere, there is a difference of 500°C or higher between the maximum value and the minimum value of boiling points among the plurality of metal oxides.

The thermal spraying powder contains a multiple oxide including a plurality of metal oxides and thereby enables production of a thermal spraying film formed of a multiple oxide. The thermal spraying powder has a particle diameter $D_{10}$ of 10 $\mu$m or more in a particle size distribution on volume basis based on laser diffractive scattering, thereby reducing the proportion of small particles. This can prevent vaporization of a metal oxide having a relatively low boiling point in a process of thermal spraying, and can reduce the proportion of a separated phase in a thermal spraying film. Meanwhile, the thermal spraying powder has a particle diameter $D_{50}$ of 40 $\mu$m or less, causing the thermal spraying powder to have a particle size distribution with sharpness on the whole. This can lower porosity in a thermal spraying film, and can also reduce surface roughness in a thermal spraying film.

Test examples relating to the present invention will be described below, but the present invention is not intended to be limited to the embodiments shown in the test examples below.

<Production Example 1. Thermal Spraying Powder Containing Multiple Oxide of $Y_2O_3$ and $Al_2O_3$>

(Example 1)

A yttrium oxide powder with an average particle diameter $D_{50}$ of 1 $\mu$m (primary particles) and an aluminum oxide powder with an average particle diameter $D_{50}$ of 0.5 $\mu$m (primary particles) were mixed as raw material powders, and dispersed in an aqueous solution containing 2% by mass of a binder (PVA), thereby preparing a slurry. The slurry was sprayed and dried in air current with a spray granulator, thereby producing granulated particles. The granulated particles thus obtained were subjected to firing at 1600°C for 6 hours under an air atmosphere, thereby sintering the primary particles to produce a fired material. The fired material thus obtained was disintegrated. Subsequently, sieve classification and airflow classification were performed, thereby providing a thermal spraying powder formed of granulated-sintered particles (secondary particles) having well-regulated particle sizes. The thermal spraying powder was defined as a thermal spraying powder according to the present example. The present example provided a particle diameter $D_{10}$ of 11.4 $\mu$m and a particle diameter $D_{50}$ of 22.4 $\mu$m. The composition and the particle size distribution of the thermal spraying powder of the present example were shown in corresponding columns in Table 1.

(Example 2 to Example 11)

The mixing ratio (mass ratio) of the yttrium oxide powder and the aluminum oxide powder in raw material powders, the firing conditions, and the classifying conditions in production of the thermal spraying powder in Example 1 were appropriately altered, thereby producing a thermal spraying powder according to each of the present examples, which was formed of granulated-sintered particles of a multiple oxide having the composition and the particle size distribution shown in corresponding columns in Table 1.

< Production Example 2. Thermal Spraying Powder Containing Multiple Oxide of $Yb_2O_3$ and $SiO_2$>

(Example 12 to Example 14)

As a raw material powder, a ytterbium silicate powder having an average particle diameter $D_{50}$ of 23 $\mu$m, a melted-pulverized powder, was provided. The raw material powder was subjected to sieve classification and airflow classification, thereby producing a thermal spraying powder formed of a melted-pulverized powder having a well-regulated particle size distribution. With appropriate alteration of a classification condition, a thermal spraying powder according to each of the present examples was produced. The composition and the particle size distribution of the thermal spraying powder of each of the present examples were shown in corresponding columns in Table 2.

<Evaluation 1. Particle Size Distribution>

A thermal spraying powder of each of the examples was measured for a particle size distribution on volume basis using a laser-diffraction-assisted particle size distribution measuring device (manufactured by Malvern Panalytical Ltd., Mastersizer 3000). In the particle size distribution, particle diameters were obtained at each point of cumulative values of 3%, 5%, 10%, 50%, and 90% accumulated from the side of microparticles. The results are shown in corresponding columns of "Dx (3)", "Dx (5)", "Dx (10)", "Dx (50)", and "Dx (90)" in Table 1 and Table 2. Additionally, in the particle size distribution, the proportions (%) of particle populations respectively having a particle diameters of less than 25 $\mu$m, 20 $\mu$m or less, 15 $\mu$m or less, 10 $\mu$m or less, and 5 $\mu$m or less were obtained. The results are shown in corresponding columns of "%-less than (25) $\mu$m", "%-(20) $\mu$m or less", "%-(15) $\mu$m or less", "%-(10) $\mu$m or less", and "%-(5) $\mu$m or less" in Table 1 and Table 2.

<Production of Thermal Spraying Film>

A thermal spraying powder according to each of the examples was used to produce a thermal spraying film by atmospheric pressure plasma spraying. As a base material, a plate material (70 mm × 50 mm × 2.3 mm) made of an aluminum alloy (Al6061) and surface-treated with rough surface processing by blasting with a brown alumina abrasive material (A#40) was used. Thermal spraying conditions were as follows:

Thermal spraying device: SG-100 (manufactured by Praxair Inc.)
Powder supplier: Model 1264 (manufactured by Praxair Inc.)
Plasma-driving gas:

argon (Ar) gas (50 psi (0.34 MPa)); and
helium (He) gas (50 psi (0.34 MPa))

Plasma output: 36 kW
Plasma generating voltage: 40 V
Plasma generating current: 900 A
Supply rate of thermal spraying powder: 20 g/min
Thermal spraying distance (distance from thermal spraying gun to base material): 120 mm

<Evaluation 2. Surface Roughness (Ra)>

A thermal spraying film produced with use of a thermal spraying powder of each of the examples was measured for the surface roughness (arithmetic average roughness) Ra in accordance with JIS B0601: 2013. The surface roughness Ra was derived by measuring surface roughnesses at any five points on each thermal spraying film with a surface roughness measurer (manufactured by Mitutoyo Corporation, SV-3000S CNC), and calculating an arithmetic average value thereof to define it as the surface roughness Ra. The results are shown in the columns "Ra" in Table 1 and Table 2.

<Evaluation 3. Cross-sectional Structure of Thermal Spraying Film>

A thermal spraying film produced with use of a thermal spraying powder of each of the examples was subjected to SEM observation for a perpendicular plane to a plan-view plane of the film (a cross-sectional plane of the thermal spraying film), and an image thus obtained was used to measure each proportion of pores/an altered phase/a main phase of each thermal spraying film. In details, first, a thermal spraying film was cut together with a base material and perpendicularly to a surface of the base material, thereby cutting out a plane to be observed (a cross-sectional plane of the thermal spraying film). The cross-sectional plane was observed by SEM to capture a cross-sectional SEM image. The cross-sectional SEM image was analyzed with an image analysis software (available from Nippon Roper K.K., Image-Pro Plus), thereby calculating each proportion of pores/an altered phase/a main phase to the total cross-sectional area. In particular, binary processing was performed to separate pores and other parts (an altered phase and a main phase), thereby calculating the proportion of the pores (porosity) (%) defined as the proportion of pore areas to the total cross-sectional area. Then, binary processing was performed to separate an altered phase and other parts (pores and a main phase) in the same manner, thereby calculating the proportion of the altered phase (%) defined as the proportion of an altered phase area to the total cross-sectional area. Then, according to the following formula (A), a proportion was calculated by subtracting the proportion of the pores (porosity) and the proportion of the altered phase are subtracted from the total cross-sectional area and defined as the proportion of the main phase (%):

proportion of pores (%) + proportion of altered phase (%) + proportion of main phase (%) = 100(%)          (A).

The results are shown correspondingly in the columns "Porosity (%)", "Altered phase (%)", and "Main phase (%)" in Table 1 and Table 2.

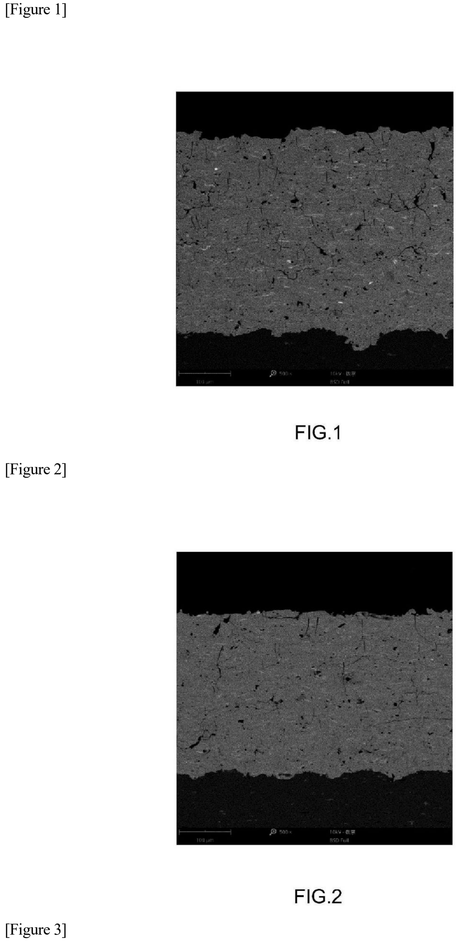

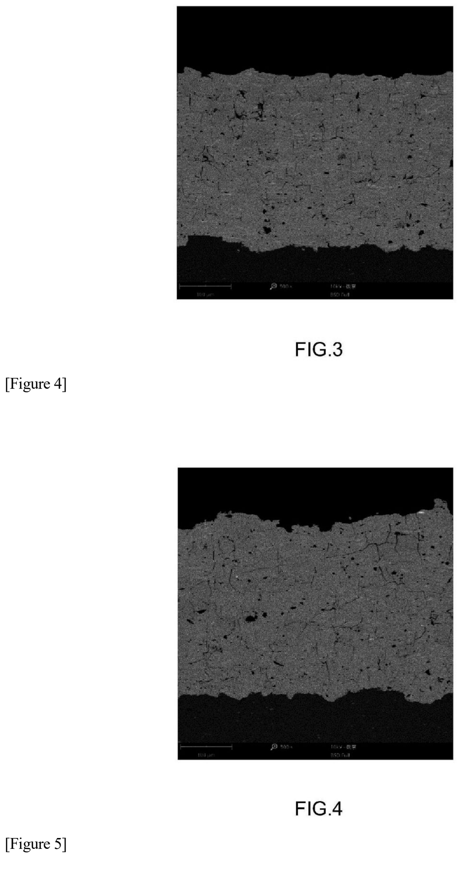

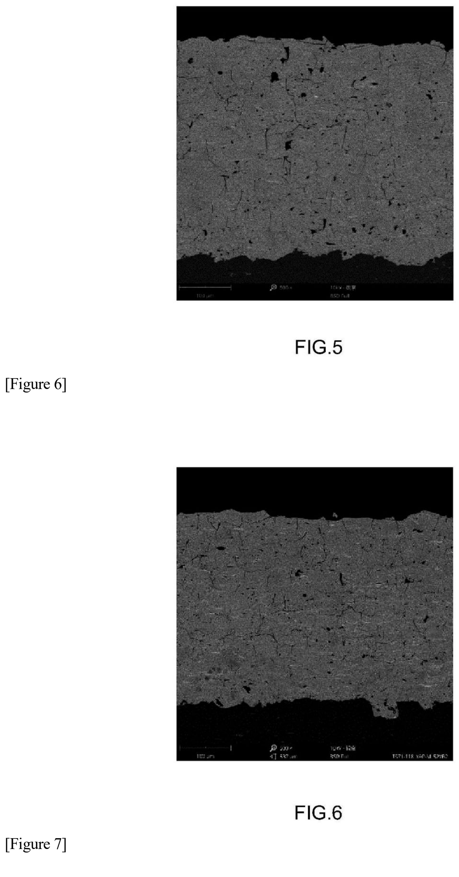

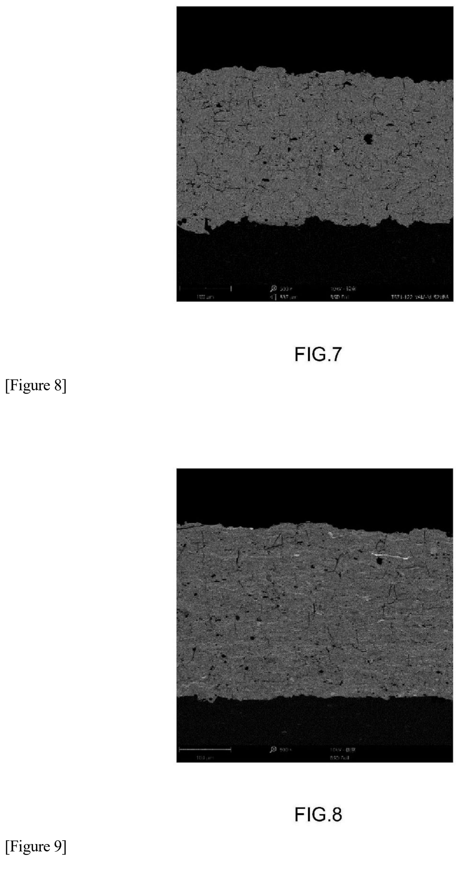

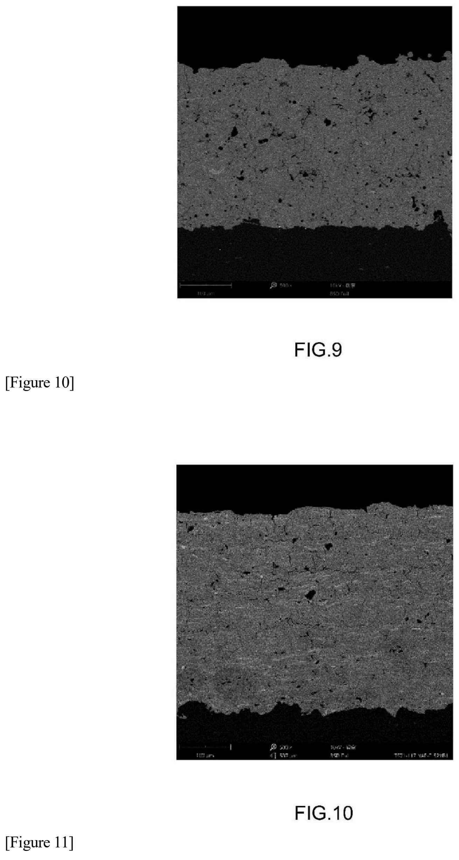

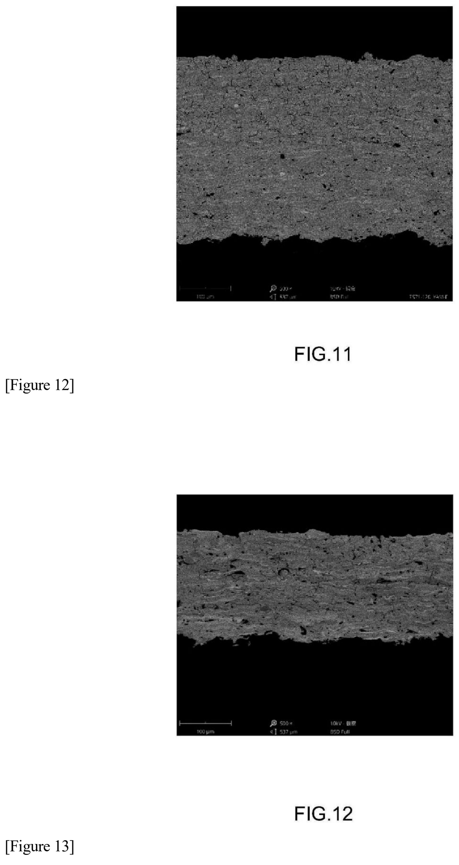

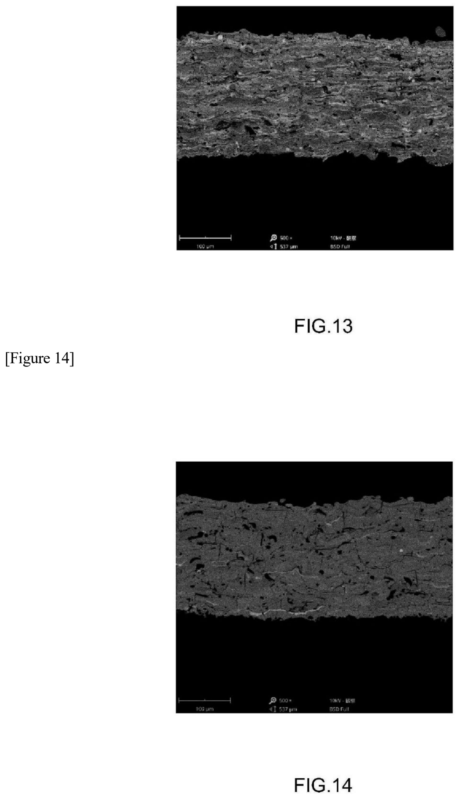

For reference, cross-sectional SEM images of thermal spraying films of the examples are correspondingly shown in Fig. 1 to Fig. 14. A scale bar in each figure indicates 100 μm. Fig. 1 is a cross-sectional SEM image of a thermal spraying film in Example 1. Fig. 2 is a cross-sectional SEM image of a thermal spraying film in Example 2. Fig. 3 is a cross-sectional SEM image of a thermal spraying film in Example 3. Fig. 4 is a cross-sectional SEM image of a thermal spraying film in Example 4. Fig. 5 is a cross-sectional SEM image of a thermal spraying film in Example 5. Fig. 6 is a cross-sectional SEM image of a thermal spraying film in Example 6. Fig. 7 is a cross-sectional SEM image of a thermal spraying film in Example 7. Fig. 8 is a cross-sectional SEM image of a thermal spraying film in Example 8. Fig. 9 is a cross-sectional SEM image of a thermal spraying film in Example 9. Fig. 10 is a cross-sectional SEM image of a thermal spraying film in Example 10. Fig. 11 is a cross-sectional SEM image of a thermal spraying film in Example 11. Fig. 12 is a cross-sectional SEM image of a thermal spraying film in Example 12. Fig. 13 is a cross-sectional SEM image of a thermal spraying film in Example 13. Fig. 14 is a cross-sectional SEM image of a thermal spraying film in Example 14.

[Table 1]

Table 1

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Composition | | YAG | YAG | YAG | YAG | YAG | YAP | YAM | YAG | YAG | YAP | YAM |
| Dx (3) | μm | 7.8 | 8.9 | 14 | 21 | 20 | 11 | 16 | 6.8 | 25 | 6.9 | 7.6 |
| Dx (5) | μm | 9.2 | 10 | 15 | 22 | 21 | 12 | 17 | 7.9 | 27 | 7.7 | 8.2 |
| Dx (10) | μm | 11 | 13 | 17 | 25 | 23 | 14 | 19 | 9.6 | 29 | 9.1 | 9.3 |
| Dx (50) | μm | 22 | 23 | 26 | 39 | 35 | 24 | 31 | 18 | 42 | 16 | 16 |
| Dx (90) | μm | 39 | 37 | 40 | 59 | 51 | 41 | 49 | 30 | 59 | 27 | 26 |
| % - less than (25) μm | % | 59 | 59 | 45 | 9.6 | 15 | 53 | 28 | 79 | 3.0 | 86 | 89 |
| % - (20) μm or less | % | 41 | 38 | 22 | 2.1 | 3.5 | 33 | 12 | 60 | 0.19 | 69 | 73 |
| % - (15) μm or less | % | 22 | 17 | 4.9 | 0.0 | 0.1 | 13 | 1.9 | 35 | 0.0 | 44 | 46 |
| % - (10) μm or less | % | 6.5 | 4.2 | 0.0 | 0.0 | 0.0 | 1.2 | 0.0 | 11 | 0.0 | 14 | 13 |
| % -(5) μm or less | % | 1.0 | 1.3 | 0.0 | 0.0 | 0.0 | 0.0 | 0.0 | 1.3 | 0.0 | 1.0 | 0.0 |
| Ra | μm | 4.2 | 4.0 | 4.4 | 6.2 | 5.1 | 4.2 | 5.0 | 3.7 | 7.2 | 3.7 | 3.2 |
| Film section | Degree of porosity (%) | 3.7 | 3.0 | 3.9 | 3.5 | 3.8 | 5.0 | 4.6 | 2.9 | 5.4 | 4.6 | 4.4 |
| | Altered phase (%) | 3.5 | 2.1 | 1.6 | 1.2 | 0.94 | 2.0 | 0.89 | 5.4 | 0.84 | 5.3 | 5.5 |
| | Main phase (%) | 93 | 95 | 94 | 95 | 95 | 93 | 95 | 92 | 94 | 90 | 90 |

EP 4 692 412 A1

As for Example 1 to Example 11, the examples with a Ra of less than 7 $\mu$m, a porosity of less than 7%, and an altered phase ratio of less than 5% were evaluated to reduce the proportion of a separated phase and improve fineness, as well as to prevent enhancement in surface roughness in a thermal spraying film. As shown in Table 1, as for thermal spraying powders containing a multiple oxide including yttrium oxide and aluminum oxide (here, YAG: $Y_3Al_5O_{12}$, YAP: $YAlO_3$, or YAM: $Y_4Al_2O_9$), the thermal spraying powders according to Example 1 to Example 7, which have a particle diameter $D_{10}$ of 10 $\mu$m or more and a particle diameter $D_{50}$ of 40 $\mu$m or less, as well as a difference of 500°C or higher between the maximum value and the minimum value of boiling points among a plurality of metal oxides (here, yttrium oxide and aluminum oxide) under a condition at 1 atmosphere, were revealed to enable formation of a thermal spraying film with reduced phase splitting and improved fineness, as well as reduced enhancement in surface roughness.

[Table 2]

Table 2

| | | Example 12 | Example 13 | Example 14 |
|---|---|---|---|---|
| Composition | | YbDS | YbDS | YbDS |
| Dx (3) | $\mu$m | 17 | 4.6 | 30 |
| Dx (5) | $\mu$m | 19 | 5.7 | 32 |
| Dx (10) | $\mu$m | 22 | 8.0 | 37 |
| Dx (50) | $\mu$m | 38 | 24 | 59 |
| Dx (90) | $\mu$m | 64 | 66 | 95 |
| % - less than (25) $\mu$m | % | 17 | 51 | 0.56 |
| % - (20) $\mu$m or less | % | 7.1 | 41 | 0.0 |
| % - (15) $\mu$m or less | % | 1.9 | 28 | 0.0 |
| % - (10) $\mu$m or less | % | 1.1 | 15 | 0.0 |
| % -(5) $\mu$m or less | % | 0.80 | 3.6 | 0.0 |
| Ra | $\mu$m | 3.9 | 5.5 | 5.7 |
| Film section | Degree of porosity (%) | 5.1 | 5.8 | 7.7 |
| | Altered phase (%) | 7.0 | 17 | 1.3 |
| | Main phase (%) | 88 | 77 | 91 |

As for Example 12 to Example 14, the examples with a Ra of less than 7 $\mu$m, a porosity of less than 7%, and an altered phase ratio of less than 8% were evaluated to reduce the proportion of a separated phase and improve fineness, as well as to prevent enhancement in surface roughness in a thermal spraying film. As shown in Table 2, as for thermal spraying powders containing a multiple oxide including ytterbium oxide and silica (here, YbDS: $Yb_2Si_2O_7$), the thermal spraying powder according to Example 12, which have a particle diameter $D_{10}$ of 10 $\mu$m or more and a particle diameter $D_{50}$ of 40 $\mu$m or less, as well as a difference of 500°C or higher between the maximum value and the minimum value of boiling points among a plurality of metal oxides (here, ytterbium oxide and silica) under a condition at 1 atmosphere, was revealed to enable formation of a thermal spraying film with reduced phase splitting and improved fineness, as well as reduced enhancement in surface roughness.

Although specific embodiments of the present invention have been described in detail above, these are merely for illustrations and do not limit the scope of claims. The art according to the claims includes various modifications and changes made to the specific embodiments illustrated above.

The art disclosed herein encompasses the invention according to the following item 1 to item 11.

[Item 1]

A thermal spraying powder containing a multiple oxide including a plurality of metal oxides, the thermal spraying powder having:

a particle diameter $D_{10}$ of 10 $\mu$m or more, the particle diameter $D_{10}$ being defined as a particle diameter at a point where a cumulative particle volume accumulated from the side of small particle diameters is 10% of the total particle volume in a cumulative particle diameter distribution on volume basis based on a particle size distribution measuring method by laser diffractive scattering,

a particle diameter $D_{50}$ of 40 $\mu$m or less, the particle diameter $D_{50}$ being defined as a particle diameter at a point where a cumulative particle volume accumulated from the side of small particle diameters is 50% of the total particle volume in a cumulative particle diameter distribution on volume basis based on a particle size distribution measuring method by laser diffractive scattering, and

a difference of 500°C or higher between the maximum value and the minimum value of boiling points among the plurality of metal oxides under a condition at 1 atmosphere.

[Item 2]

The thermal spraying powder set forth in the item 1, wherein the multiple oxide contains at least two or more from the group of lanthanoid elements consisting of La, Ce, Pr, Nd, Sm, Eu, Gd, Tb, Dy, Ho, Er, Tm, Yb, and Lu; metalloid elements consisting of Si and Ge; typical elements consisting of Al and Ga; and transition elements consisting of Sc, Y, Ti, Zr, Hf, Nb, Ta, Mo, and W.

[Item 3]

The thermal spraying powder set forth in the item 1 or 2, containing at least two or more from the group consisting of Al, Si, Y, Zr, and Yb.

[Item 4]

The thermal spraying powder set forth in any one of the items 1 to 3, wherein the plurality of metal oxides contains at least two of $Al_2O_3$, $SiO_2$, $Y_2O_3$, $ZrO_2$, and $Yb_2O_3$.

[Item 5]

The thermal spraying powder set forth in any one of the items 1 to 4, containing a multiple oxide of $Y_2O_3$ and $Al_2O_3$, a multiple oxide of $Yb_2O_3$ and $SiO_2$, or a multiple oxide of $SiO_2$ and $Al_2O_3$.

[Item 6]

The thermal spraying powder set forth in any one of the items 1 to 5, containing $YAlO_3$, $Y_4Al_2O_9$, $Y_3Al_5O_{12}$, $Yb_2Si_2O_7$, or $3Al_2O_3 \cdot 2SiO_2$.

[Item 7]

The thermal spraying powder set forth in any one of the items 1 to 6, wherein the particle diameter $D_{50}$ is 23 $\mu$m or more and 38 $\mu$m or less.

[Item 8]

The thermal spraying powder set forth in any one of the items 1 to 7, wherein the particle diameter $D_{10}$ is 12 $\mu$m or more and 21 $\mu$m or less.

[Item 9]

The thermal spraying powder set forth in any one of the items 1 to 8, being formed of secondary particles derived by binding primary particles of a multiple oxide together.

[Item 10]

The thermal spraying powder set forth in the item 9, wherein the secondary particles are granulated-sintered particles.

[Item 11]

The thermal spraying powder set forth in any one of the items 1 to 8, being formed of melted-pulverized powder of the multiple oxide.

Claims

1. A thermal spraying powder comprising a multiple oxide comprising a plurality of metal oxides, the thermal spraying powder having:

a particle diameter $D_{10}$ of 10 $\mu$m or more, the particle diameter $D_{10}$ being defined as a particle diameter at a point where a cumulative particle volume accumulated from the side of small particle diameters is 10% of the total particle volume in a cumulative particle diameter distribution on volume basis based on a particle size distribution measuring method by laser diffractive scattering,
a particle diameter $D_{50}$ of 40 $\mu$m or less, the particle diameter $D_{50}$ being defined as a particle diameter at a point where a cumulative particle volume accumulated from the side of small particle diameters is 50% of the total particle volume in a cumulative particle diameter distribution on volume basis based on a particle size distribution measuring method by laser diffractive scattering, and
a difference of 500°C or higher between the maximum value and the minimum value of boiling points among the plurality of metal oxides under a condition at 1 atmosphere.

2. The thermal spraying powder according to claim 1, wherein the multiple oxide comprises at least two or more from the group of lanthanoid elements consisting of La, Ce, Pr, Nd, Sm, Eu, Gd, Tb, Dy, Ho, Er, Tm, Yb, and Lu; metalloid elements consisting of Si and Ge; typical elements consisting of Al and Ga; and transition elements consisting of Sc, Y, Ti, Zr, Hf, Nb, Ta, Mo, and W.

3. The thermal spraying powder according to claim 1 or 2, comprising at least two or more from the group consisting of Al, Si, Y, Zr, and Yb.

4. The thermal spraying powder according to claim 1 or 2, wherein the plurality of metal oxides comprises at least two of $Al_2O_3$, $SiO_2$, $Y_2O_3$, $ZrO_2$, and $Yb_2O_3$.

5. The thermal spraying powder according to claim 1 or 2, comprising a multiple oxide of $Y_2O_3$ and $Al_2O_3$, a multiple oxide of $Yb_2O_3$ and $SiO_2$, or a multiple oxide of $SiO_2$ and $Al_2O_3$.

6. The thermal spraying powder according to claim 5, comprising $YAlO_3$, $Y_4Al_2O_9$, $Y_3Al_5O_{12}$, $Yb_2Si_2O_7$, or $3Al_2O_3 \cdot 2SiO_2$.

7. The thermal spraying powder according to claim 1 or 2, wherein the particle diameter $D_{50}$ is 23 $\mu$m or more and 38 $\mu$m or less.

8. The thermal spraying powder according to claim 1 or 2, wherein the particle diameter $D_{10}$ is 12 $\mu$m or more and 21 $\mu$m or less.

9. The thermal spraying powder according to claim 1 or 2, being formed of secondary particles derived by binding primary particles of a multiple oxide together.

10. The thermal spraying powder according to claim 9, wherein the secondary particles are granulated-sintered particles.

11. The thermal spraying powder according to claim 1 or 2, being formed of melted-pulverized powder of the multiple oxide.

[Figure 1]

FIG.1

[Figure 2]

FIG.2

[Figure 3]

FIG.3

[Figure 4]

FIG.4

[Figure 5]

FIG.5

[Figure 6]

FIG.6

[Figure 7]

FIG.7

[Figure 8]

FIG.8

[Figure 9]

FIG.9

[Figure 10]

FIG.10

[Figure 11]

FIG.11

[Figure 12]

FIG.12

[Figure 13]

FIG.13

[Figure 14]

FIG.14

## INTERNATIONAL SEARCH REPORT

| International application No. |
|---|
| **PCT/JP2024/003194** |

| A. | CLASSIFICATION OF SUBJECT MATTER |
|---|---|

*C23C 4/11*(2016.01)i; *C01F 17/34*(2020.01)i; *C04B 41/87*(2006.01)i
FI:     C23C4/11; C04B41/87 K; C01F17/34

According to International Patent Classification (IPC) or to both national classification and IPC

| B. | FIELDS SEARCHED |
|---|---|

Minimum documentation searched (classification system followed by classification symbols)

C23C4/11; C01F17/34; C04B41/87

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-98519 A (SHIN-ETSU CHEMICAL CO., LTD.) 04 July 2022 (2022-07-04) example 5 | 1-2 |
| Y | | 1-11 |
| X | JP 2012-232871 A (DAIICHI KIGENSO KAGAKU KOGYO CO., LTD.) 29 November 2012 (2012-11-29) examples 1-2 | 1, 7-8 |
| Y | | 1-11 |
| X | JP 2011-514872 A (SAINT-GOBAIN CENTRE DE RECHERCHES ET D'ETUDES EUROPEEN) 12 May 2011 (2011-05-12) comparative example 1 | 1, 3-4, 7-8 |
| Y | | 1-11 |
| Y | JP 2002-80954 A (SHIN-ETSU CHEMICAL CO., LTD.) 22 March 2002 (2002-03-22) examples 5-6 | 1-11 |

☑ Further documents are listed in the continuation of Box C.      ☑ See patent family annex.

| | |
|---|---|
| *       Special categories of cited documents: | "T"    later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"    document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"    document member of the same patent family |

| Date of the actual completion of the international search | Date of mailing of the international search report |
|---|---|
| **05 April 2024** | **16 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/003194** |

### C. DOCUMENTS CONSIDERED TO BE RELEVANT

| Category* | Citation of document, with indication, where appropriate, of the relevant passages | Relevant to claim No. |
| --- | --- | --- |
| A | CN 111410201 A (HARBIN INSTITUTE OF TECHNOLOGY) 14 July 2020 (2020-07-14)<br>example 13 | 1-11 |
| A | US 2019/0300998 A1 (SEWON HARDFACING CO., LTD.) 03 October 2019 (2019-10-03)<br>claim 3, tables 1-2 | 1-11 |
| A | US 2015/0194682 A1 (BLOOM ENERGY CORPORATION) 09 July 2015 (2015-07-09)<br>claim 10 | 1-11 |
| A | JP 2005-522580 A (SAINT-GOBAIN CERAMICS & PLASTICS, INC.) 28 July 2005<br>(2005-07-28)<br>paragraph [0017] | 1-11 |

Form PCT/ISA/210 (second sheet) (July 2022)

## INTERNATIONAL SEARCH REPORT
### Information on patent family members

International application No.

**PCT/JP2024/003194**

| Patent document cited in search report | | | Publication date (day/month/year) | Patent family member(s) | | | Publication date (day/month/year) |
|---|---|---|---|---|---|---|---|
| JP | 2022-98519 | A | 04 July 2022 | CN example 5 | 116685564 | A | |
| | | | | KR | 10-2023-0124032 | A | |
| | | | | WO | 2022/138410 | A1 | |
| JP | 2012-232871 | A | 29 November 2012 | US examples 1-2 | 2014/0050842 | A1 | |
| | | | | CN | 103562133 | A | |
| | | | | WO | 2012/147449 | A1 | |
| | | | | EP | 2703350 | A1 | |
| JP | 2011-514872 | A | 12 May 2011 | US comparative example 1 | 2009/0202735 | A1 | |
| | | | | CN | 101945835 | A | |
| | | | | KR | 10-2010-0129291 | A | |
| | | | | CA | 2715176 | A | |
| | | | | WO | 2009/101368 | A2 | |
| JP | 2002-80954 | A | 22 March 2002 | US examples 5-6 | 2002/0018902 | A1 | |
| | | | | CN | 1342782 | A | |
| | | | | KR | 10-2002-0001650 | A | |
| | | | | EP | 1167565 | A2 | |
| CN | 111410201 | A | 14 July 2020 | (Family: none) | | | |
| US | 2019/0300998 | A1 | 03 October 2019 | KR claim 3, tables 1-2 | 10-2019-0113259 | A | |
| US | 2015/0194682 | A1 | 09 July 2015 | (Family: none) | | | |
| JP | 2005-522580 | A | 28 July 2005 | US paragraph [0018] | 2003/0191009 | A1 | |
| | | | | CN | 1646432 | A | |
| | | | | KR | 10-0696093 | B1 | |
| | | | | CA | 2479959 | A1 | |
| | | | | WO | 2003/086974 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023058418 A

- JP 4560387 B

**Non-patent literature cited in the description**

- **SAMSONOV, G. V.** The Latest Oxide Handbook-Physicochemical Properties. Japan-Soviet Press Agency, 1979, 209
- **GINYA ADACHI**. Science of Rare Earths. Kagaku-Dojin Publishing Company, Inc., 1999, 198

- Lanthanide. **HAIRE, R. G. et al.** Handbook on the Physics and Chemistry of Rare Earth. AcTinide Chemistry, 1994, vol. 18
- Handbook of Chemistry: Pure Chemistry. The Chemical Society of Japan, 2021